# EUROPEAN PATENT APPLICATION

(11) **EP 4 783 250 A1**
(43) Date of publication of application: **29.07.2026**
(21) Application number: 26152794.9
(22) Date of filing: 20.01.2026
(51) Int. Cl.: H01M 4/133, H01M 4/134, H01M 10/052, H01M 10/0587, H01M 4/36

(54) **NEGATIVE ELECTRODE FOR RECHARGEABLE LITHIUM BATTERY AND RECHARGEABLE LITHIUM BATTERY INCLUDING SAME**

(30) Priority: 22.01.2025 KR 20250009672
(71) Applicant: SAMSUNG SDI CO., LTD., Yongin-si, Gyeonggi-do 17084 (KR)
(72) Inventor: KIM, Yunwoong, 17084 Gyeonggi-do (KR); KIM, Kijun, 17084 Gyeonggi-do (KR)
(74) Representative: Michalski Hüttermann & Partner mbB

(57) **Abstract**

Disclosed are a negative electrode for a rechargeable lithium battery, and a rechargeable lithium battery including the negative electrode. The negative electrode for a rechargeable lithium battery includes a current collector, a first negative electrode active material layer on a first surface of the current collector, and a second negative electrode active material layer on a second surface of the current collector. A difference in the active mass density between the first negative electrode active material layer and the second negative electrode active material layer is in a range of about 0.02 g/cc to about 0.06 g/cc.

## Description

### BACKGROUND OF THE DISCLOSURE

### (a) Field of the Disclosure

Example embodiments relates to a negative electrode for a rechargeable lithium battery. and a rechargeable lithium battery including the negative electrode.

### (b) Description of the Related Art

With increasing use of electronic devices that use batteries such as, e.g., mobile phones, laptop computers, electric vehicles, and the like, a demand for smaller, lighter and relatively high-capacity rechargeable lithium batteries is increasing. Improving performances of rechargeable lithium batteries may thus be advantageous.

Rechargeable lithium batteries typically include a positive electrode and a negative electrode including an active material capable of intercalating and deintercalating lithium ions, and an electrolyte, and electrical energy is produced by oxidation and reduction reactions when lithium ions are intercalated/deintercalated at the positive and negative electrodes.

### SUMMARY

One or more example embodiments includes a negative electrode for a rechargeable lithium battery exhibiting desired or improved durability such as cycle-life, or the like.

Another example embodiment includes a rechargeable lithium battery including the negative electrode.

One or more example embodiments include a negative electrode for a rechargeable lithium battery including a current collector, a first negative electrode active material layer formed on a first surface of the current collector, and a second negative electrode active material layer formed on a second surface of the current collector. A difference in the active mass density between the first negative electrode active material layer and the second negative electrode active material layer is in a range of ≥ 0.02 g/cc to ≤ 0.06 g/cc.

Another example embodiment includes a rechargeable lithium battery including the negative electrode, a positive electrode, and a non-aqueous electrolyte.

A negative electrode for a rechargeable lithium battery according to one or more example embodiments may exhibit desired or improved high-rate cycle-life characteristics.

### BRIEF DESCRIPTION OF THE DRAWINGS

FIG. 1 is a cross-sectional view schematically showing a negative electrode for a rechargeable lithium battery according to one or more example embodiments.
FIG. 2 to FIG. 5 are schematic views schematically showing a rechargeable lithium battery according to one or more example embodiments.
FIG. 6 is a drawing schematically showing a structure of the wound negative electrode according to Example 1.
FIG. 7 is a photograph of a separator separated after charging and discharging of the cell according to Comparative Example 1.
FIG. 8 is a photograph of a separator separated after charging and discharging of the cell according to Example 1.
FIG. 9 is a graph showing the cycle-life characteristics of the cells according to Example 1 and Comparative Example 1.

### DETAILED DESCRIPTION

Hereinafter, example embodiments are described in detail. However, these embodiments are examples, the present disclosure is not limited thereto and the present disclosure is defined by the scope of claims.

As included herein, when a specific definition is not otherwise provided, it is understood that when an element such as a layer, film, region, or substrate is referred to as being "on" another element, the element may be "directly on" the other element or intervening elements may also be present therebetween.

Unless otherwise specified in this specification, what is indicated in the singular may also include the plural. In addition, unless otherwise specified, "A or B" may mean "including A, including B, or including A and B."

As used herein, "the term" combination thereof may include a mixture, a laminate, a complex, a copolymer, an alloy, a blend, a reactant of constituents.

In the present disclosure, when a definition is not otherwise provided, a particle diameter may be an average particle diameter. The particle diameter indicates an average particle diameter (D50) where a cumulative volume is about 50 volume% in a particle size distribution. The average particle diameter (D50) may be measured by a method known to those skilled in the art, for example, by a particle size analyzer, or by a transmission electron microscopic image, or a scanning electron microscopic image. In some example embodiments, a dynamic light-scattering measurement device is used to perform a data analysis, and the number of particles is counted for each particle size range, and from this, the average particle diameter (D50) value may be readily obtained through a calculation. The particle size may be measured by a laser diffraction method. The laser diffraction may be performed by distributing particles to be measured in a distribution solvent and introducing the distribution solvent to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50 % standard of particle distribution in the measuring device.

In some example embodiments, an average particle diameter may be measured by various techniques, and for example, may be measured by a particle size analyzer.

In some example embodiments, a thickness may be measured by a scanning electron microscope (SEM) or a transmission electron microscope (TEM) image for the cross-section, but is not limited thereto, and may be measured by any techniques, as long as the techniques may measure the thickness in the related arts. The thickness may be an average thickness.

As used herein, soft carbon refers to graphitizable carbon materials and are readily graphitized by heat treatment at a high temperature, e.g., about 2800 °C, and hard carbon refers to non-graphitizable carbon materials and are not substantially and slightly graphitized by heat treatment. The terms soft carbon and hard carbon may be known in the related arts.

In some example embodiments, the crystalline carbon and the amorphous carbon may be distinguished through XRD measurement. The crystalline carbon includes natural graphite and artificial graphite. Natural graphite may indicate graphite which may be naturally generated by separating graphite from minerals, and if (when) measured by XRD, the interplanar spacing (d002) of the (002) plane may be in a range of ≥ 3.350 Å to ≤ 3.360 Å. Artificial graphite may indicate graphite manufactured by graphitization, and if (e.g., when) measured by XRD, the interplanar spacing (d002) of the (002) plane may be in a range of ≥ 3.355 Å to ≤ 3.365 Å. Meanwhile, the amorphous carbon may have the interplanar spacing (d 002) of the (002) plane of about 3.34 Å or less, if (when) measured by XRD. The XRD may be measured using CuKα ray as a target line with an X-ray diffraction analyzer (e.g., product name: X'Pert, manufacturer: Malvern Panalytical) and by removing a monochromator to improve a peak density resolution. The measurement condition may be 2θ=10 ° to 80 °, a scan speed (°/S) of 0.044 to 0.089, and a step size (°/step) of 0.013 to 0.039.

In some example embodiments, a weight-average-molecular weight may be measured by using, e.g., a gel permeation chromatography.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

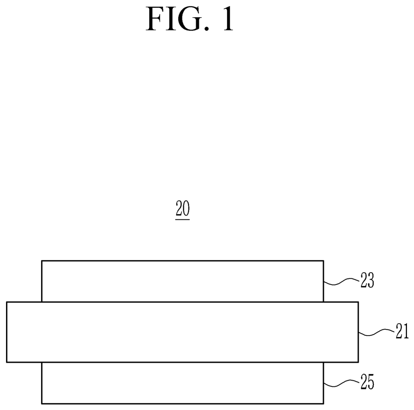

A negative electrode for a rechargeable lithium battery according to one or more example embodiments includes a current collector, a first negative electrode active material layer formed on a first surface of the current collector, and a second negative electrode active material layer formed on a second surface of the current collector. FIG. 1 schematically shows such a negative electrode, and the negative electrode 20 includes a current collector 21, a first negative electrode active material layer 23 located on a first surface of the current collector 21, and a second negative electrode active material layer 25 located on a second surface of the current collector 21. The first surface and the second surface are located on opposite sides of each other with respect to the current collector, as shown in FIG. 1.

In one or more example embodiments, a difference in the active mass density between the first negative electrode active material layer and the second negative electrode active material layer is in a range of ≥ 0.02 g/cc to ≤ 0.06 g/cc. In another example embodiment, the difference in the active mass density between the first negative electrode active material layer and the second negative electrode active material layer may be in a range of ≥ 0.02 g/cc to ≤ 0.04 g/cc.

The negative electrode is a negative electrode applied to a wound-type battery. The wound-type battery refers to a battery in which an electrode assembly including a negative electrode, an electrolyte, and a positive electrode is wound (winding) and inserted into a battery case. Such a wound-type battery may be, for example, a cylindrical type, a pouch-type, a prismatic battery, and thus, the negative electrode according to one or more example embodiments may be applied to a cylindrical, a pouch-type, and/or a prismatic battery. Such a wound-type battery may, due to a difference in the radius of curvature in the winding process, exhibit a significant difference in substantial active mass density of the active material layer formed on both surfaces of the current collector after wounding, for example, the active mass on the inner surface may become greater than the active mass on the outer surface, which may result in deteriorated cycle-life characteristics.

In one or more example embodiments, a negative electrode is provided in which the difference in the active mass density between the first negative electrode active material layer and the second negative electrode active material layer is adjusted to be in a range of ≥ 0.02 g/cc to ≤ 0.06 g/cc, or ≥ 0.02 g/cc to ≤ 0.04 g/cc.

If (when) the difference in the active mass density between the first negative electrode active material layer and the second negative electrode active material layer is included in the range, in a wound electrode assembly prepared by using the negative electrode, the first and the second negative electrode active material layers disposed on both surfaces of the current collector may have only a small difference in the active mass density, i.e., substantially almost identical active mass density. Thus, shortcomings such as degradation of durability of the cycle-life characteristics, which occur if (when) the difference in the active mass density is large, may be resolved.

If (when) the difference in the active mass density is lower than about 0.02 g/cc, the difference in the active mass density between the first and the second negative electrode active material layer increases in the prepared wound electrode assembly, and thus, the effect of reducing or preventing the deterioration is not sufficient. If (when) the difference in the active mass density is greater than about 0.06 g/cc, the difference in the active mass densities between the first negative electrode active material layer and the second negative electrode active material layer becomes too large, and thus, deterioration may increase during preparation of a wound-type battery, which is not desirable.

In one or more example embodiments, the first surface may be wound as an inner surface during winding to prepare an electrode assembly, and the second surface may be wound as an outer surface during winding to prepare an electrode assembly.

In one or more example embodiments, the active mass density of the first negative electrode active material layer may be in a range of ≥ 0.02 g/cc to ≤ 0.06 g/cc lower than the active mass density of the second negative electrode active material layer, or may be in a range of ≥ 0.02 g/cc to ≤ 0.04 g/cc lower.

If (when) the active mass density of the first negative electrode active material layer disposed on the inner surface is ≥ 0.02 g/cc to ≤ 0.06g/cc lower than the active mass densities of the second negative electrode active material layer disposed on the outer surface, the active mass densities between the inner surface and the outer surface may become substantially similar in the wound electrode assembly prepared by using the electrode.

Thus, the battery deterioration due to the increase in the difference in the active mass density of the inner surface and the outer surface in the wound assembly may be reduced or suppressed. The active mass densities of the inner surface and the outer surface before winding may be obtained, if (when) the wound electrode assembly is disassembled again.

The effects of adjusting the active mass density may be realized by designing the active mass density of the first negative electrode active material layer disposed on the inner surface to be smaller than the active mass density of the second negative electrode active material layer disposed on the outer surface. If (when) the active mass density of the first negative electrode active material layer disposed on the inner surface is designed to be greater than the active mass density of the second negative electrode active material layer disposed on the outer surface, the battery deterioration may further worsen.

If (when) the difference in the active mass densities satisfies the above condition, the active mass density of each layer need not be limited. For example, the active mass density of the first negative electrode active material layer may be in a range of ≥ 1.28 g/cc to ≤ 1.68 g/cc, or ≥ 1.58 g/cc to ≤ 1.68 g/cc. The active mass density of the second negative electrode active material layer may be in a range of ≥ 1.30 g/cc to ≤ 1.70 g/cc, or ≥ 1.60 g/cc to ≤ 1.70 g/cc.

If (when) a negative electrode is prepared by a conventional procedure, after the same negative electrode active material layer composition is coated and dried on both the inner and outer surfaces with respect to the current collector, the inner and the outer surfaces are subjected to a pressurization simultaneously or contemporaneously, so that the active mass densities between the inner surface and the outer surface is prepared to be identical.

The difference in the active mass densities between the first negative electrode active material layer and the second negative electrode active material layer according to one or more example embodiments may be adjusted by the following procedures.

### 1) Utilizing of active material with different particle strengths

As the negative electrode active materials included in the first negative electrode active material layer and the second negative electrode active material layer, active materials with different particle strengths may be utilized. For example, the active materials with a particle strength difference in a range of ≥ 40 MPa to ≤ 120 MPa, or ≥ 80 MPa to ≤ 120 MPa, may be utilized. Examples of the active material with low particle strength may be or include, e.g., soft carbon, natural graphite, or a combination thereof, and examples of the active material with high particle strength may be or include, e.g., hard carbon, natural graphite modified to have high particle strength, artificial graphite, or a combination thereof. In another example embodiment, an active material with low particle strength and an active material with high particle strength may be utilized in a mixture, and herein, the mixing ratio in the first negative electrode active material layer and the second negative electrode active material layer may be differently adjusted to have a difference between about ≥ 40 MPa to ≤ 120 MPa, or ≥ 80 MPa to ≤ 120 MPa. For example, in the first negative electrode active material layer, the active material with low particle strength and the active material with high particle strength may be used in a mixture in a weight ratio in a range of about 1:99 to about 40:60, and in the second negative electrode active material layer, the active material with low particle strength and the active material with high particle strength may be used in a mixture in a weight ratio in a range of about 99:1 to about 60:40.

Even if (when) the pressurization is carried out under the same conditions, using an active material with low particle strength may increase the active mass density, whereas using an active material with high particle strength may decrease the active mass density. Thus, if (when) the active material which particle strength difference falls within the above range is respectively applied to the first negative electrode active material layer and the second negative electrode active material layer, a negative electrode in which the active mass density difference between the first and the second negative electrode active material layers is in a range of ≥ 0.02 g/cc to ≤ 0.06 g/cc, may be prepared.

### 2) Utilization of active material with different particle sizes

As the negative electrode active materials included in the first negative electrode active material layer and the second negative electrode active material layer, a negative electrode active material having a uniform particle size may be utilized on one surface, while a mixture of active materials with different particle sizes may be utilized on the other surface. In another example embodiment, the mixing ratio of active materials with different particle sizes on the inner/outer surfaces may be varied.

For example, the negative electrode active material with a uniform particle size may be utilized on one surface and a heterogeneous active material in which a large-particle active material and a small-particle active material are mixed, may be utilized on the other surface.

The negative electrode active material with a uniform particle size may be or include a large-particle active material with an average particle diameter (D50) in a range of ≥ 12 µm to ≤ 22 µm, or ≥ 12 µm to ≤ 16 µm, or a small-particle active material with an average particle diameter (D50) in a range of ≥ 3 µm to ≤ 11 µm, or ≥ 3 µm to ≤ 6 µm. The active material with a uniform particle size means utilizing only a large-particle active material or only a small-particle active material.

In case of the heterogeneous active material in which the large-particle active material and the small-particle active material are mixed, the average particle diameter (D50) of each of the large-particle active material and the small-particle active material may fall within the above-mentioned range. The mixing ratio of the large-particle active material and the small-particle active material may be in a range of about 8:2 to about 5:5 by weight ratio, or about 6:4 to about 5:5 by weight ratio.

If (when) the heterogeneous active material in which the large-particle active material and the small-particle active material are mixed, is applied to both the first and the second negative electrode active material layer, the large-particle active material and the small-particle active material at a weight ratio in a range of about 99:1 to more than about 80:less than about 20, or a weight ratio in a range of less than about 70:more than about 30 to about 1:99 may be utilized in the first negative electrode active material layer, and the large-particle active material and the small-particle active material at a weight ratio in a range of about 8:2 to 7:3 may be utilized in the second negative electrode active material layer.

The active mass density of the active material layer using the negative electrode active material with a uniform particle size may be smaller than the active mass density of the active material layer using the heterogeneous active materials. For example, the active mass density of the active material layer using the large-particle or the small-particle active material with the average particle diameter (D50) within the range may be in a range of ≥ 0.02 g/cc to ≤ 0.06 g/cc smaller than the active mass density of the active material layer using the heterogeneous active material.

### 3) Change in tap density or pellet density

As the negative electrode active material included in the first negative electrode active material layer and the second negative electrode active material layer, active materials with different tap densities or pellet densities may be utilized.

For example, as the negative electrode active material included in the first negative electrode active material layer and the second negative electrode active material layer, the negative electrode active material with a tap density difference in a range of ≥ 0.08 g/cc to ≤ 0.20 g/cc, or ≥ 0.14 g/cc to ≤ 0.20 g/cc, may be utilized. The tap density may be determined from volume after dropping by filling about 10 g of active material into a 25 ml graduated cylinder, and fixing graduated cylinder, and simultaneously or contemporaneously performing tapping and rotation 3000 times. Hereon, the fixing of the graduated cylinder may be carried out, for example, using Tap equipment (available from Quantachrome Corporation, Autotap).

In another example embodiments, as the negative electrode active material included in the first negative electrode active material layer and the second negative electrode active material layer, the negative electrode active material with a pellet density difference in a range of ≥ 0.05 g/cc to ≤ 0.70 g/cc, or ≥ 0.25 g/cc to ≤ 0.70 g/cc, may be utilized. The pellet density may be the density of a pellet prepared by putting 1 g of the negative electrode active material into a mold and maintaining it for 30 seconds under a press force of 2 tons.

In one or more example embodiments, the first negative electrode active material layer includes a first negative electrode active material, and the second negative electrode active material layer includes a second negative electrode active material.

The first and the second negative electrode active material may be or include at least one of a carbon-based active material, a silicon-based active material, or a combination thereof, and may be the same or different.

The carbon-based active material may be or include crystalline carbon, amorphous carbon, or a combination thereof.

Examples of the crystalline carbon may be graphite such as unspecified shaped, sheet shaped, flake shaped, spherical shaped, or fiber shaped natural graphite or artificial graphite, and examples of the amorphous carbon may be or include at least one of soft carbon, hard carbon, mesophase pitch carbides, sintered coke, or the like.

The silicon-based active material may be or include at least one of silicon, a Si-C composite, SiOₓ (0 <x≤2), a Si-Q alloy (wherein Q is or includes at least one of an alkali metal, an alkaline-earth metal, a Group 13 element, a Group 14 element (except for Si) a Group 15 element, a Group 16 element, a transition metal, a rare earth element, and a combination thereof), or a combination thereof. In one or more example embodiment, the silicon-based active material may be or include a silicon-carbon composite.

The silicon-carbon composite may be or include a composite of silicon and amorphous carbon. According to one or more example embodiments, the silicon-carbon composite may include silicon particles and an amorphous carbon coating layer disposed on a surface of the silicon particles. For example, the silicon-carbon composite may include a secondary particle in which silicon primary particles are agglomerated, and an amorphous carbon coating layer (shell) disposed on the secondary particle. The amorphous carbon may be positioned between the silicon primary particles, for example, the silicon primary particles may be coated with amorphous carbon. The secondary particle may be presented by distributing in an amorphous carbon matrix.

The silicon primary particles may be nano silicon particles. The nano silicon particles may have an average particle diameter in a range of ≥ 10 nm to ≤ 900 nm, ≥ 10 nm to ≤ 800 nm, ≥ 10 nm to ≤ 500 nm, ≥ 10 nm to ≤ 300 nm, or ≥ 10 nm to ≤ 200 nm. If (when) the average particle diameter of the nano silicon particles is within the above range, the extreme volume expansion caused during charge and discharge may be reduced or suppressed, and a breakage of the conductive path due to crushing of particle during charging and discharging may be reduced or prevented. In one or more example embodiments, the particle diameter of the silicon secondary particle may not be particularly limited.

The thickness of the amorphous carbon coating layer may be adjusted as desired, but for example, may be in a range of ≥ 2 nm to ≤ 800 nm, ≥ 5 nm to ≤ 600 nm, ≥ 10 nm to ≤ 400 nm, or ≥ 20 nm to ≤ 200 nm. In one or more example embodiments, the thickness of the amorphous carbon coating layer may be measured by a scanning electron microscope (SEM) image or a transmission electron microscope (TEM) image for the cross-section of the silicon-carbon composite, but it is not limited thereto, and thus, the thickness of the amorphous carbon coating layer may be measured by any techniques as long as the thickness of the amorphous carbon coating layer is measured.

An average particle diameter of the silicon-carbon composite may be adjusted as desired, and may be for example, about 30 µm or less, for example, in a range of ≥ 1 µm to ≤ 30 µm, ≥ 2 µm to ≤ 25 µm, ≥ 3 µm to ≤ 20 µm, or ≥ 5 µm to ≤ 15 µm.

Based on 100 wt% of the silicon-carbon composite, an amount of the silicon particles may be in a range of ≥ 30 wt% to ≤ 70 wt%, or ≥ 40 wt% to ≤ 65 wt%. An amount of the amorphous carbon may be, based on the total 100 wt% of the silicon-carbon composite, in a range of ≥ 30 wt% to ≤ 70 wt%, or ≥ 35 wt% to ≤ 60 wt%. If (when) the amounts of the silicon particles and the amorphous carbon are within the range, higher capacity may be realized.

In one or more example embodiments, the silicon-carbon composite may further include crystalline carbon. For example, the silicon-carbon composite may include a core including silicon particles and crystalline carbon, and an amorphous carbon coating layer on a surface of the core. For example, the silicon-carbon composite may include a core including secondary particles where the silicon primary particles and crystalline carbon are agglomerated, and an amorphous carbon coating layer on the core. The amorphous carbon may be positioned between the silicon primary particles or between the crystalline carbon, allowing the amorphous carbon to be filled between the silicon primary particles or the crystalline carbon.

If (when) the silicon-carbon composite includes the silicon particles, the crystalline carbon, and the amorphous carbon, based on the total 100 wt% of the silicon particles, the crystalline carbon, and the amorphous carbon, an amount of the crystalline carbon may be in a range of ≥ 10 wt% to ≤ 70 wt%, or ≥ 20 wt% to ≤ 60 wt%, an amount of the amorphous carbon may be in a range of ≥ 20 wt% to ≤ 40 wt%, or ≥ 20 wt% to ≤ 30 wt%, and an amount of the silicon particle may be in a range of ≥ 10 wt% to ≤ 70 wt%, or ≥ 10 wt% to ≤ 60 wt%.

In one or more example embodiments, the silicon-carbon composite may include silicon particles and porous carbon structure. The silicon particles may be positioned on the porous carbon structure by chemical vapor deposition. The silicon-carbon composite may further include a carbon coating layer on a surface thereof. The porous carbon structure may be formed of or include carbon such as carbon black, or the like. The carbon coating layer may be or include an amorphous carbon coating layer.

The first negative electrode active material layer and the second negative electrode active material layer include a binder, and may further include a conductive material. The binder and the conductive material included in the first negative electrode active material layer and the second negative electrode active material layer may be the same as, or different from, each other.

In the first negative electrode active material layer and the second negative electrode active material layer, an amount of the active material may be in a range of ≥ 95 wt% to ≤ 99 wt%, and an amount of the binder may be in a range of ≥ 1 wt% to ≤ 5 wt%. In one or more example embodiments, an amount of the active material may be in a range of ≥ 91.5 wt% to ≤ 99 wt%, an amount of the binder may be in a range of ≥ 1 wt% to ≤ 5 wt%, and an amount of the conductive material may be in a range of ≥ 0.5 wt% to ≤ 5 wt%.

The binder improves binding properties of negative electrode active material particles with one another, and with a current collector. The binder may include a non-aqueous binder, an aqueous binder, a dry binder, or a combination thereof.

The non-aqueous binder may include at least one of polyvinylchloride, carboxylated polyvinylchloride, polyvinyl fluoride, an ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acryl resin, a phenolic resin, an epoxy resin, polyvinyl alcohol, or a combination thereof.

If (when) the aqueous binder is a negative electrode binder, a cellulose-based compound may further provide viscosity. The cellulose-based compound includes one or more of carboxymethyl cellulose, hydroxypropylmethyl cellulose, methyl cellulose, or alkali metal salts thereof. The alkali metal may be or include at least one of Na, K, or Li. The cellulose-based compound constitutes a thickener and constitutes an aqueous binder.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change in the battery. Examples of the conductive material may be or include a carbon-based material such as at least one of natural graphite, artificial graphite, carbon black, acetylene black, ketjen black, a carbon fiber, a carbon nanofiber, carbon nanotube, or the like; a metal-based material of a metal powder or a metal fiber including at least one of copper, nickel, aluminum, silver, and the like; a conductive polymer such as a polyphenylene derivative; or a mixture thereof.

The current collector may include at least one of a copper foil, a nickel foil, a stainless steel foil, a titanium foil, a nickel foam, a copper foam, a polymer substrate coated with a conductive metal, and a combination thereof.

### Rechargeable lithium battery:

Another example embodiment includes a rechargeable lithium battery including the negative electrode, a positive electrode, and a non-aqueous electrolyte.

### Positive electrode:

The positive electrode may include a current collector and a positive electrode active material layer on the current collector. The positive electrode active material layer includes a positive electrode active material, and may further include a binder and/or a conductive material.

For example, the positive electrode may further include an additive that may constitute a sacrificial positive electrode.

An amount of the positive electrode active material may be in a range of ≥ 90 wt% to ≤ 99.5 wt% based on 100 wt% of the positive electrode active material layer, and amounts of the binder and the conductive material may be respectively in a range of ≥ 0.5 wt% to ≤ 5 wt% based on 100 wt% of the positive electrode active material layer.

The positive electrode active material may include a compound (lithiated intercalation compound) that is capable of intercalating and deintercalating lithium. In some example embodiments, at least one of a composite oxide of lithium and a metal such as or including at least one of cobalt, manganese, nickel, or combinations thereof may be used.

The composite oxide may be or include a lithium transition metal composite oxide, and examples thereof may include at least one of lithium nickel-based oxide, lithium cobalt-based oxide, lithium manganese-based oxide, lithium iron phosphate-based compound, cobalt-free nickel-manganese-based oxide, or a combination thereof.

For example, the following compounds represented by any one of the following chemical formulas may be used. LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α} D_{α} (0.90 ≤ a ≤ 1.8, 0 ≤ b ≤ 0.5, 0 ≤ c ≤ 0.5, 0< α <2); LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0< α <2); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤2); LiₐFePO₄ (0.90 ≤ a ≤ 1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

For example, the positive electrode active material may be or include a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may achieve high capacity, and may be applied to a high-capacity, high-density rechargeable lithium battery.

The binder improves binding properties of positive electrode active material particles with one another, and with a current collector. Examples of the binder may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, or the like, but are not limited thereto.

The conductive material is included to provide electrode conductivity, and any suitable electrically conductive material may be used as a conductive material unless the electrically conductive material causes a chemical change. Examples of the conductive material may include a carbon-based material such as at least one of natural graphite, artificial graphite, carbon black, acetylene black, Ketjen black, carbon fiber, carbon nanofiber, carbon nanotube, or the like; a metal-based material of a metal powder or a metal fiber including at least one of copper, nickel, aluminum, silver, or the like; a conductive polymer such as a polyphenylene derivative; or a mixture thereof.

The current collector may include Al, but the current collector is not limited thereto.

### Electrolyte:

The electrolyte for a rechargeable lithium battery includes a non-aqueous organic solvent and a lithium salt.

The non-aqueous organic solvent constitutes a medium that transmits ions taking part in the electrochemical reaction of a battery.

The non-aqueous organic solvent may include at least one of a carbonate-based, ester-based, ether-based, ketone-based, alcohol-based, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include at least one of methyl acetate, ethyl acetate, n-propyl acetate, dimethyl acetate, methyl propionate, ethyl propionate, decanolide, γ-butyrolactone, mevalonolactone, valerolactone, caprolactone, or the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. The ketone-based solvent may include cyclohexanone, or the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

The organic solvent may be used alone, or in a mixture of two or more solvents.

If (when) the carbonate-based solvent is used, the cyclic carbonate and the linear carbonate may be mixed together therewith, and the cyclic carbonate and the linear carbonate may be mixed at a volume ratio in a range of about 1:1 to about 1:9.

The electrolyte may further include at least one of vinylethyl carbonate, vinylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof, as an additive.

The lithium salt dissolved in an organic solvent supplies a battery with lithium ions, basically operates the rechargeable lithium battery, and improves transportation of the lithium ions between positive and negative electrodes. Examples of the lithium salt include one or more supporting electrolyte salt such as or including at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), where x and y are an integer in a range of 1 to 20, lithium trifluoromethane sulfonate, lithium tetrafluoroethane sulfonate, lithium difluorobis(oxalato)phosphate (LiDFBOP), lithium difluoro(oxalate)borate (LiDFOB), and lithium bis(oxalato) borate (LiBOB).

### Separator:

A separator may be between the positive electrode and the negative electrode depending on a type (or kind) of a rechargeable lithium battery. The separator may include at least one of polyethylene, polypropylene, polyvinylidene fluoride or multi-layers thereof having two or more layers and may be a mixed together multilayer such as a polyethylene/polypropylene double-layered separator, a polyethylene/polypropylene/polyethylene triple-layered separator, a polypropylene/polyethylene/polypropylene triple-layered separator, and the like.

The separator may include a porous substrate and a coating layer including an organic material, an inorganic material, or a combination thereof on one surface or on both surfaces (e.g., one or two opposing surfaces) of the porous substrate.

The porous substrate may be or include a glass fiber, or a polymer film formed of or including any one or more of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON, and polytetrafluoroethylene, or a copolymer or mixture of two or more thereof.

The organic material may include a polyvinylidene fluoride-based polymer or a (meth)acrylic-based polymer.

The inorganic material may be or include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and an inorganic material may be mixed in one coating layer, or a coating layer including an organic material and a coating layer including an inorganic material may be stacked together.

The rechargeable lithium battery may be cylindrical, pouch, or prismatic-type batteries. In one or more example embodiments, the rechargeable lithium battery may be a cylindrical battery with a diameter in a range of ≥ 12 mm to about 48 mm.

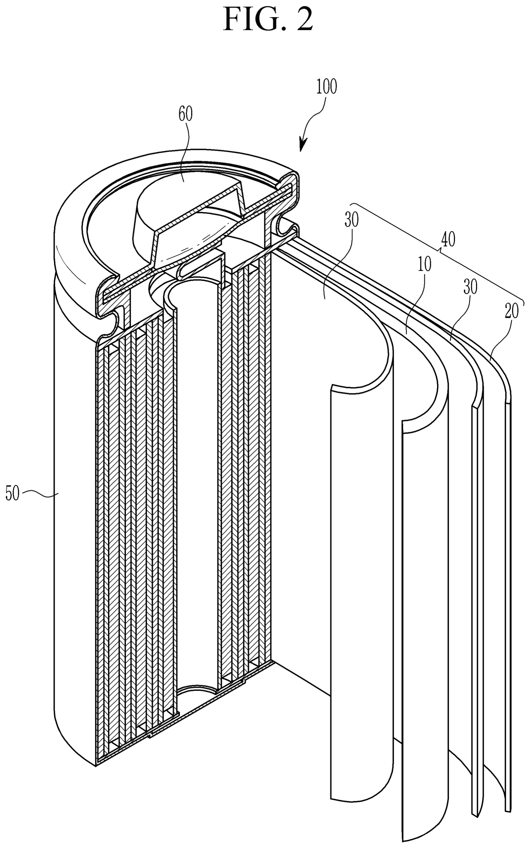

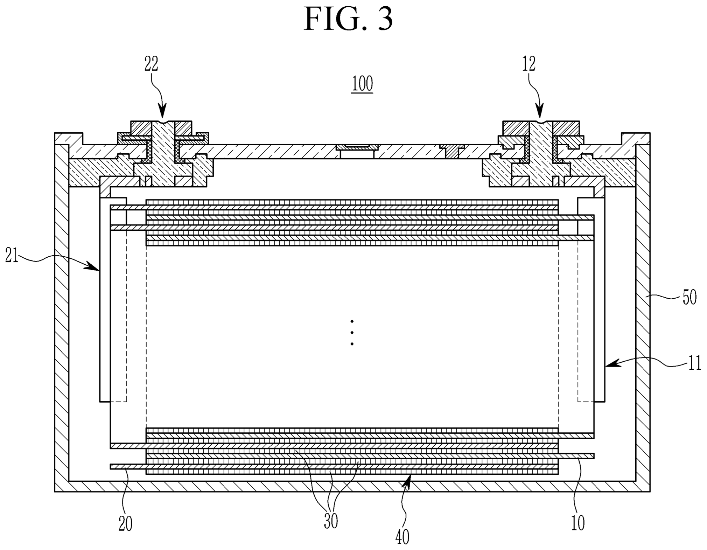

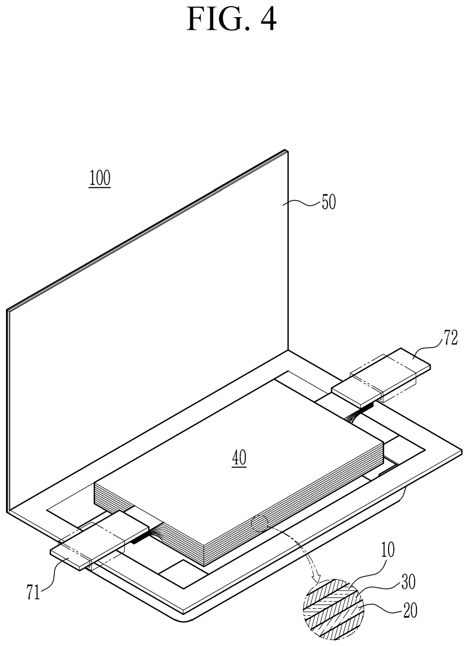

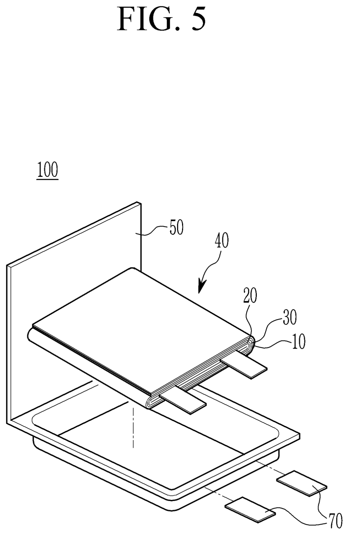

FIG. 2 to FIG. 5 are schematic views illustrating a rechargeable lithium battery according to an example embodiment, and FIG. 2 shows a cylindrical battery, FIG. 3 shows a prismatic battery, and FIG. 4 and FIG. 5 show pouch-type batteries. Referring to FIG. 2 to FIG. 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 that seals the case 50, as shown in FIG. 2. In FIG. 3, the rechargeable lithium battery 100 may include a positive electrode lead tab 11, and a positive terminal 12 connected to the positive electrode lead tab 11, a negative electrode lead tab 21, and a negative terminal 22 connected to the negative electrode lead tab 21. As shown in FIG. 5, the rechargeable lithium battery 100 may include an electrode tab 70, which may form an electric path for inducing the current formed in the electrode assembly 40 to the outside of the battery 100, or a positive electrode tab 71 and a negative electrode tab 72 which may also form an electric path for inducing the current formed in the electrode assembly 40 to the outside of the battery 100, as shown in FIG. 4.

The rechargeable lithium battery according to an example embodiment may be applicable to, e.g., automobiles, mobile phones, and/or various suitable types (or kinds) of electric devices, as non-limiting examples.

The following Examples and Comparative Examples are provided in order to highlight characteristics of one or more example embodiments, but it is understood that the Examples and Comparative Examples are not to be construed as limiting the scope of the example embodiments, nor are the Comparative Examples to be construed as being outside the scope of the example embodiments. Further, it is understood that the example embodiments are not limited to the particular details described in the Examples and Comparative Example.

### Example 1:

96 wt% of a negative electrode active material (specifically, hard carbon) with a particle strength of 130 MPa, 2 wt% of a styrene butadiene rubber binder, and 2 wt% of a carboxymethyl cellulose thickener were mixed in a water solvent to prepare a first negative electrode active material layer slurry.

96 wt% of a negative electrode active material (specifically, soft carbon) with a particle strength of 60 MPa, 2 wt% of a styrene butadiene rubber binder, and 2 wt% of a carboxymethyl cellulose thickener were mixed in a water solvent to prepare a second negative electrode active material layer slurry.

The first negative electrode active material slurry was coated on one surface of a Cu foil current collector with a thickness of 10 µm and dried, and then the second negative electrode active material layer slurry was coated on the other surface of the current collector and dried.

Thereafter, a pressurization was carried out to prepare a negative electrode having a first negative electrode active material layer and a second negative electrode active material layer respectively formed on both surfaces of the current collector. The thickness of the negative electrode including the first negative electrode active material layer, the second negative electrode active material layer, and the current collector was set to 170 µm, and the length and the width were set to 696 mm and 59.8 mm, respectively. The active mass density of the first negative electrode active material layer was 1.63 g/cc, and the active mass density of the second negative electrode active material layer was 1.66 g/cc. In the prepared negative electrode, the areas of the first and the second negative electrode active material layers were simplified and calculated. The results are shown in Table 1 below.

96 wt% of a LiNi_{0.8}Co_{0.1}Mn_{0.1}O₂ positive electrode active material, 2 wt% of Ketjen black, and 2 wt% of polyvinylidene fluoride were mixed in an N-methyl pyrrolidone solvent to prepare a positive electrode active material layer slurry. The positive electrode active material layer slurry was coated on an Al foil current collector, dried, and pressurized to prepare a positive electrode.

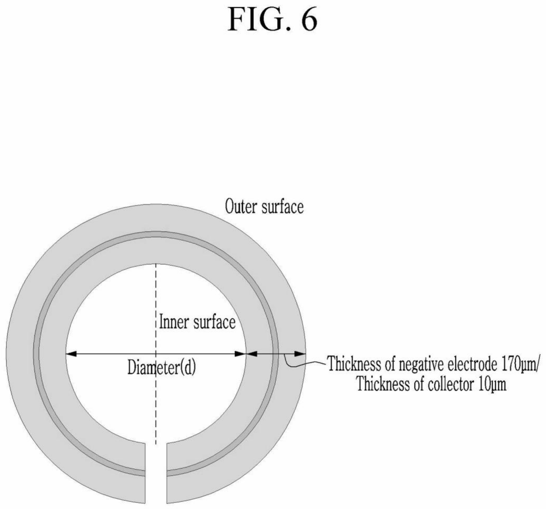

The negative electrode, a polypropylene separator, and the positive electrode were laminated to prepare an electrode assembly. The electrode assembly was wound. Herein, the electrode assembly was wound to have a diameter of approximately 17.5 mm such that the first negative electrode active material layer was disposed on an inner surface, and the second negative electrode active material layer was disposed on an outer surface during winding. FIG. 6 schematically illustrates a case in which a single winding has been performed. As the diameter varies depending on the number of turns (i.e., for each winding), the area of the active material layer on the inner surface and the outer surface was calculated for each diameter, and the area ratio of the inner surface to outer surface was obtained. The results are shown in Table 1 below.

Using the active mass density before winding and the area ratio of the inner active material layer before and after winding, the active mass density of the inner surface after winding was obtained according to Equation 1 below. Using the active mass density before winding and the area ratio of the outer active material layer before and after winding, the active mass density of the outer surface after winding was obtained according to Equation 2 below. The results are shown in Table 2 below. Furthermore, the difference of the active mass density between the inner surface and the outer surface was obtained. The results are shown in Table 2 below.

### Equation 1:

Active mass density of the inner surface after winding = (active mass density before winding X area of the active material layer on the inner surface before winding)/area of the active material layer on the inner surface after winding. Equation 2:

Active mass density of the outer surface after winding = (active mass density before winding X area of the active material layer on the outer surface before winding)/area of the active material layer on the outer surface after winding.

The electrode assembly was inserted into a cylindrical battery case and an electrolyte was injected thereto, to fabricate a full cell. As the electrolyte, 1.15M LiPF₆ dissolved in ethylene carbonate, ethylmethyl carbonate, and dimethyl carbonate (3:5:2 volume ratio) was utilized.

### Comparative Example 1:

96 wt% of a negative electrode active material (specifically, soft carbon) with a particle strength of 60 MPa, 2 wt% of a styrene butadiene rubber binder, and 2 wt% of a carboxymethyl cellulose thickener were mixed in a water solvent to prepare a first negative electrode active material layer slurry and the second negative electrode active material slurry layer, respectively.

The first negative electrode active material slurry was coated on one surface of a Cu foil current collector with a thickness of 10 µm and dried, and then the second negative electrode active material layer slurry was coated on the other surface of the current collector and dried.

Thereafter, a pressurization was carried out to prepare a negative electrode having a first negative electrode active material layer and a second negative electrode active material layer respectively formed on both surfaces of the current collector. The thickness of the negative electrode including the first negative electrode active material layer, the second negative electrode active material layer, and the current collector was set to 170 µm, and the length and the width were set to 696 mm and 59.8 mm, respectively. The active mass density of the first negative electrode active material layer was 1.66 g/cc, and the active mass density of the second negative electrode active material layer was 1.66 g/cc.

Using the negative electrode, a full cell was fabricated by the same procedure as in Example 1. As the diameter varies depending on the number of turns (i.e., for each winding), the area of the active material layer on the inner surface and the outer surface was calculated for each diameter, and the area ratio of the inner surface to outer surface ratio was obtained in the same manner as in Example 1. The results are shown in Table 3.

Furthermore, using the active mass density before winding, the area ratio of the inner active material layer before and after winding, and the area ratio of the outer active material layer before and after winding, the active mass density of the inner surface after winding and the active mass density on the outer surface after winding were obtained in the same manner as in Example 1, and the differences in the active mass density between the inner surface and the outer surface was obtained. The results are shown in Table 4 below.

**Table 1**

| Diameter (mm) | Area of inner active material layer and outer active material layer before winding (mm²) | Area of inner active material layer in wound state (mm²) | Area of outer active material layer in wound state (mm²) | Inner/ outer surface area ratio in wound state (%) |
|---|---|---|---|---|
| 4 | 1.005 | 1.025 | 1.071 | 104.488 |
| 5 | 1.257 | 1.277 | 1.322 | 103.524 |
| 6 | 1.508 | 1.528 | 1.573 | 102.945 |
| 7 | 1.759 | 1.779 | 1.825 | 102.586 |
| 8 | 2.011 | 2.031 | 2.076 | 102.216 |
| 9 | 2.262 | 2.282 | 2.327 | 101.972 |
| 10 | 2.513 | 2.533 | 2.579 | 101.816 |
| 11 | 2.765 | 2.785 | 2.830 | 101.616 |
| 12 | 3.016 | 3.036 | 3.081 | 101.482 |
| 13 | 3.267 | 3.287 | 3.333 | 101.399 |
| 14 | 3.519 | 3.539 | 3.584 | 101.272 |
| 15 | 3.770 | 3.790 | 3.835 | 101.187 |
| 16 | 4.021 | 4.041 | 4.087 | 101.138 |
| 17 | 4.273 | 4.293 | 4.338 | 101.048 |
| 18 | 4.524 | 4.544 | 4.589 | 100.990 |
| 19 | 4.775 | 4.795 | 4.841 | 100.959 |
| 20 | 5.027 | 5.047 | 5.092 | 100.892 |
| 21 | 5.278 | 5.298 | 5.343 | 100.849 |
| 45 | 11.310 | 11.330 | 11.375 | 100.397 |

**Table 2**

| Diameter (mm) | Active mass density of inner surface in wound state (g/cc): design 1.63 g/cc | Active mass density of outer surface in wound state (g/cc): design 1.66g/cc | Inner/ outer surface active mass density difference in wound state (g/cc) |
|---|---|---|---|
| 4 | 1.598 | 1.559 | -0.039 |
| 5 | 1.604 | 1.578 | -0.026 |
| 6 | 1.609 | 1.591 | -0.018 |
| 7 | 1.612 | 1.601 | -0.011 |
| 8 | 1.614 | 1.608 | -0.006 |
| 9 | 1.616 | 1.613 | -0.003 |
| 10 | 1.617 | 1.618 | 0.001 |
| 11 | 1.618 | 1.622 | 0.004 |
| 12 | 1.619 | 1.625 | 0.006 |
| 13 | 1.620 | 1.627 | 0.007 |
| 14 | 1.621 | 1.630 | 0.009 |
| 15 | 1.621 | 1.632 | 0.011 |
| 16 | 1.622 | 1.633 | 0.011 |
| 17 | 1.622 | 1.635 | 0.013 |
| 18 | 1.623 | 1.636 | 0.013 |
| 19 | 1.623 | 1.638 | 0.015 |
| 20 | 1.624 | 1.639 | 0.015 |
| 21 | 1.624 | 1.640 | 0.016 |
| 45 | 1.627 | 1.650 | 0.023 |

**Table 3**

| Diameter (mm) | Area of inner active material layer and outer active material layer before winding (mm²) | Area of inner active material layer in wound state (mm²) | Area of outer active material layer in wound state (mm²) | Inner/ outer surface area ratio in wound state (%) |
|---|---|---|---|---|
| 4 | 1.005 | 1.025 | 1.071 | 104.488 |
| 5 | 1.257 | 1.277 | 1.322 | 103.524 |
| 6 | 1.508 | 1.528 | 1.573 | 102.945 |
| 7 | 1.759 | 1.779 | 1.825 | 102.586 |
| 8 | 2.011 | 2.031 | 2.076 | 102.216 |
| 9 | 2.262 | 2.282 | 2.327 | 101.972 |
| 10 | 2.513 | 2.533 | 2.579 | 101.816 |
| 11 | 2.765 | 2.785 | 2.830 | 101.616 |
| 12 | 3.016 | 3.036 | 3.081 | 101.482 |
| 13 | 3.267 | 3.287 | 3.333 | 101.399 |
| 14 | 3.519 | 3.539 | 3.584 | 101.272 |
| 15 | 3.770 | 3.790 | 3.835 | 101.187 |
| 16 | 4.021 | 4.041 | 4.087 | 101.138 |
| 17 | 4.273 | 4.293 | 4.338 | 101.048 |
| 18 | 4.524 | 4.544 | 4.589 | 100.990 |
| 19 | 4.775 | 4.795 | 4.841 | 100.959 |
| 20 | 5.027 | 5.047 | 5.092 | 100.892 |
| 21 | 5.278 | 5.298 | 5.343 | 100.849 |
| 45 | 11.310 | 11.330 | 11.375 | 100.397 |

**Table 4**

| Diameter (mm) | Active mass density of inner surface in wound state (g/cc): design 1.66 g/cc | Active mass density of outer surface in wound state (g/cc): design 1.66 g/cc | Inner/ outer surface active mass density difference in wound state (g/cc) |
|---|---|---|---|
| 4 | 1.627 | 1.559 | -0.068 |
| 5 | 1.634 | 1.578 | -0.056 |
| 6 | 1.638 | 1.591 | -0.047 |
| 7 | 1.641 | 1.601 | -0.04 |
| 8 | 1.644 | 1.608 | -0.036 |
| 9 | 1.645 | 1.613 | -0.032 |
| 10 | 1.647 | 1.618 | -0.029 |
| 11 | 1.648 | 1.622 | -0.026 |
| 12 | 1.649 | 1.625 | -0.024 |
| 13 | 1.650 | 1.627 | -0.023 |
| 14 | 1.651 | 1.630 | -0.021 |
| 15 | 1.651 | 1.632 | -0.019 |
| 16 | 1.652 | 1.633 | -0.019 |
| 17 | 1.652 | 1.635 | -0.017 |
| 18 | 1.653 | 1.636 | -0.017 |
| 19 | 1.653 | 1.638 | -0.015 |
| 20 | 1.653 | 1.639 | -0.014 |
| 21 | 1.653 | 1.639 | -0.014 |
| 45 | 1.657 | 1.650 | -0.007 |

As shown in Table 2 above, in the cell of Example 1, in which the active mass density on the inner surface was formed to be 0.03 g/cc lower than the active mass density on the outer surface, the difference in the active mass density between the inner surface and the outer surface after winding was at most 0.039. Whereas, as shown in Table 4, in the cell of Comparative Example 1, in which the active mass density on the inner surface and the active mass density on the outer surface were the same, the difference in the active mass density between the inner surface and the outer surface after winding was at most 0.068, which was large.

From these results, it can be seen that if a wound-type cell is fabricated using a negative electrode having a difference in active mass density between the inner surface and the outer surface of 0.02 g/cc to 0.06 g/cc, the difference in active mass density between the inner surface and the outer surface of the negative electrode in the fabricated battery does not increase significantly.

### Experimental Example 1) Separator photograph after charging and discharging

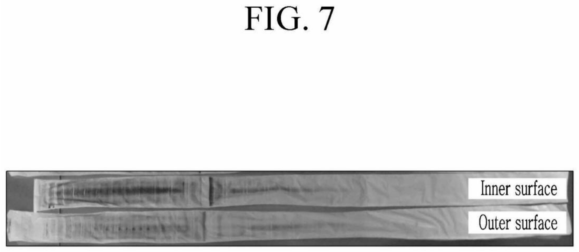

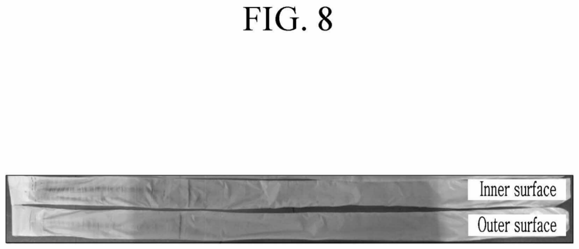

The cells of Example 1 and Comparative Example 1 were charged at 0.5 C and discharged at 0.5 C for 500 cycles, and then the cells were disassembled to obtain separators. A photograph of the separator that was in contact with the inner and outer surfaces of the negative electrode obtained from the cell of Comparative Example 1 is shown in FIG. 7. A photograph of the separator that was in contact with the inner and outer surfaces of the negative electrode obtained from the cell of Example 1 is shown in FIG. 8.

In FIG. 7, the black region indicates side reaction region and thus, it can be seen that in Comparative Example 1, the deterioration of the inner surface was greater than the deterioration of the outer surface.

In contrast, as shown in FIG. 8, in Example 1, it can be seen that the deterioration of the inner surface and the outer surface occurred to a similar extent. From these results, it can be seen that if (when) the difference in active mass density between the first negative electrode active material layer and the second negative electrode active material layer is 0.02 g/cc to 0.06 g/cc, for example, if (when) the active mass density of the first negative electrode active material layer is lower than the active mass density of the second negative electrode active material layer, deterioration of the inner surface may be reduced or prevented.

### Experimental Example 2) Evaluation of cycle-life characteristic

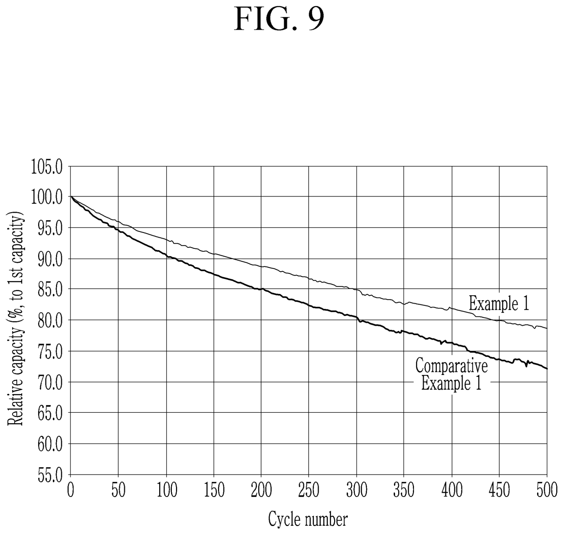

The cells of Example 1 and Comparative Example 1 were charged at 0.5 C and discharged at 0.5 C for 500 cycles and the discharge capacity was measured. The ratio of discharge capacity at each cycle to discharge capacity at 1^{st} cycle was calculated. The results are shown in FIG. 9. As shown in FIG. 9, the ratio of discharge capacity at the 500^{th} cycle to the discharge capacity at the 1^{st} cycle was 79 % in Example 1, whereas was 72 % in Comparative Example 1. From these results, it can be seen that the cell including the negative electrode in which the difference in active mass density between the first negative electrode active material layer and the second negative electrode active material layer of Example 1 is 0.02 g/cc to 0.06 g/cc, exhibits superior or improved cycle-life characteristics to those of Comparative Example 1.

While this disclosure has been described in connection with what is presently considered to be practical example embodiments, it is to be understood that the disclosure is not limited to the disclosed example embodiments, but, on the contrary, is intended to cover various modifications and equivalent arrangements included within the spirit and scope of the appended claims.

## Claims

1. A negative electrode (20) for a rechargeable lithium battery (100), the negative electrode (20) comprising:
a current collector (21);
a first negative electrode active material layer formed on a first surface of the current collector (21); and
a second negative electrode active material layer formed on a second surface of the current collector (21),
wherein a difference in the active mass density between the first negative electrode active material layer and the second negative electrode active material layer is in a range of ≥ 0.02 g/cc to ≤ 0.06 g/cc.

2. The negative electrode (20) for a rechargeable lithium battery (100) as claimed in claim 1, wherein the difference in the active mass density is in a range of ≥ 0.02 g/cc to ≤ 0.04 g/cc.

3. The negative electrode (20) for a rechargeable lithium battery (100) as claimed in claim 1 or 2, wherein the first surface is an inner surface during winding to form an electrode assembly (40), and
the second surface is an outer surface during winding to form an electrode assembly (40).

4. The negative electrode (20) for a rechargeable lithium battery (100) as claimed in any one of claims 1 to 3, wherein the active mass density of the first negative electrode active material layer is ≥ 0.02 g/cc to ≤ 0.06 g/cc lower than the active mass density of the second negative electrode active material layer.

5. The negative electrode (20) for a rechargeable lithium battery (100) as claimed in any one of claims 1 to 4, wherein the active mass density of the first negative electrode active material layer is ≥ 0.02 g/cc to ≤ 0.04 g/cc lower than the active mass density of the second negative electrode active material layer.

6. The negative electrode (20) for a rechargeable lithium battery (100) as claimed in any one of claims 1 to 5, wherein the first negative electrode active material layer comprises a first negative electrode active material, and the first negative electrode active material comprises at least one of a carbon-based active material, a silicon-based active material, and a combination thereof, and
the second negative electrode active material layer comprises a second negative electrode active material, and the second negative electrode active material comprises at least one of a carbon-based active material, a silicon-based active material, and a combination thereof.

7. The negative electrode (20) for a rechargeable lithium battery (100) as claimed in any one of claims 1 to 6, wherein the first negative electrode active material layer comprises a first negative electrode active material, and the first negative electrode active material comprises at least one of a carbon-based active material, wherein the carbon-based active material comprises at least one of crystalline carbon, amorphous carbon, and a combination thereof.

8. The negative electrode (20) for a rechargeable lithium battery (100) as claimed in any one of claims 1 to 7, wherein the first negative electrode active material layer comprises a first negative electrode active material, and the first negative electrode active material comprises at least one of a silicon-based active material, wherein the silicon-based active material comprises a silicon-carbon composite.

9. The negative electrode (20) for a rechargeable lithium battery (100) as claimed in claim 8, wherein the silicon-carbon composite comprises a composite of silicon and amorphous carbon.

10. The negative electrode (20) for a rechargeable lithium battery (100) as claimed in claim 9, wherein the composite of silicon and amorphous carbon comprises silicon particles and an amorphous carbon coating layer on a surface of the silicon particles.

11. The negative electrode (20) for a rechargeable lithium battery (100) as claimed in any one of claims 8 to 10, wherein the silicon-carbon composite further comprises crystalline carbon.

12. The negative electrode (20) for a rechargeable lithium battery (100) as claimed in any one of claims 8 to 11, wherein the silicon-carbon composite comprises a core comprising silicon particles and crystalline carbon, and an amorphous carbon coating layer on a surface of the core.

13. A rechargeable lithium battery (100), comprising:
the negative electrode (20) as claimed in any one of claims 1 to 12;
a positive electrode (10); and
a non-aqueous electrolyte.

14. The rechargeable lithium battery (100) as claimed in claim 13, wherein a type of the rechargeable lithium battery (100) comprises a cylindrical type, a pouch type, or a prismatic type.

15. The rechargeable lithium battery (100) as claimed in claim 13 or 14, wherein the rechargeable lithium battery (100) comprises a cylindrical battery having a diameter in a range of ≥ 12 mm to ≤ 48 mm.
